# EUROPÄISCHE PATENTSCHRIFT

(11) **EP 0 879 158 B1**
(45) Veröffentlichungstag und Bekanntmachung des Hinweises auf die Patenterteilung: **28.07.1999**
(21) Anmeldenummer: 97917226.9
(22) Anmeldetag: 07.02.1997
(51) Int. Cl.: B60Q 1/14, B60S 1/08

(54) **OPTISCHER SENSOR**
OPTIC SENSOR
DETECTEUR OPTIQUE

(30) Priorität: 13.02.1996 DE 19605190
(43) Veröffentlichungstag der Anmeldung: 25.11.1998
(73) Patentinhaber: Marquardt GmbH, 78604 Rietheim-Weilheim (DE)
(72) Erfinder: SPIES, Martin, Johann, D-86558 Hohenwart (DE); JUNG, Peter, D-72336 Balingen (DE)
(74) Vertreter: Otten, Herbert
(86) Internationale Anmeldenummer: DE9700292
(87) Internationale Veröffentlichungsnummer: WO9729926

(56) Entgegenhaltungen:
- WO-A-93/02883
- WO-A-94/03967
- WO-A-94/23277
- PATENT ABSTRACTS OF JAPAN vol. 010, no. 109 (M-472), 23.April 1986 & JP 60 240545 A (NIPPON DENSO KK), 29.November 1985,
- PATENT ABSTRACTS OF JAPAN vol. 7, no. 187 (M-236) [1332] , 16.August 1983 & JP 58 089430 A (NIPPON DENSO KK), 27.Mai 1983,

## Beschreibung

Die Erfindung betrifft ein Sensorsystem für ein Kraftfahrzeug zur Ermittlung einer Meßgröße nach dem Oberbegriff des Patentanspruchs 1 sowie ein Verfahren zum Betrieb eines Sensorsystems nach dem Oberbegriff des Patentanspruchs 7.

In Kraftfahrzeugen wird eine Vielzahl von Sensoren eingesetzt, wobei in Abhängigkeit von der Meßgröße die Auslösung bestimmter Funktionen im Kraftfahrzeug, die Steuerung oder Regelung von im Kraftfahrzeug befindlichen Geräten oder sonstige Aktionen erfolgen können.

So sind auch Sensoren bekannt, die im Kraftfahrzeug für die Steuerung der Scheibenwischer dienen. Ein derartiger Sensor ist in der US-A-4 960 996 beschrieben, wobei mit diesem Sensor die Totalreflexion von Lichtstrahlung auf der Scheibenaußenseite des Kraftfahrzeugs gemessen wird, woraus die Benetzung der Scheibe mit Wasser oder Wassertropfen ermittelt wird. In Abhängigkeit von der Benetzung wird dann der Scheibenwischer angesteuert. Außerdem sind Sensoren bekannt, die zur Ansteuerung der Beleuchtungsanlage für das Kraftfahrzeug dienen. So zeigt die DE-A-41 36 427 einen mittels Fotoelementen arbeitenden Sensor, der die aus der Umgebung einfallende oder auftreffende Lichtmenge mißt. Durch eine Schwellwertdetektion dieser Lichtmenge oder Detektion der Lichtmengenänderung lassen sich dann die Scheinwerfer des Kraftfahrzeugs ein- oder ausschalten oder regulieren.

Nachteilig bei diesen Sensoren ist, daß der vom Sensor erfaßte Bereich auf einen Wert der Meßgröße abgebildet wird. Es findet im Sensor gewissermaßen eine Integration über den erfaßten Bereich statt. Damit lassen sich nicht alle der im üblichen Betrieb des Kraftfahrzeugs vorkommenden Situationen beherrschen. Unter Umständen kann es dabei sogar zu Fehlfunktionen oder Fehlsteuerungen im Kraftfahrzeug kommen. Dies erfordert dann ein manuelles Eingreifen des Benutzers, was durch den Einsatz von Sensoren eigentlich vermieden werden soll. Im ungünstigen Fall kann es dadurch auch zur Gefährdung der Sicherheit des Benutzers kommen. Weiter nachteilig ist, daß aufgrund von stetig steigenden Komfortwünschen der Benutzer eine Vielzahl von Sensoren erforderlich ist, wodurch Probleme in der Plazierung der Sensoren im Kraftfahrzeug auftreten können. Außerdem geht damit ein nicht unerheblicher Kostenaufwand einher.

Aus der DE-A-43 29 983 ist weiter bekannt, verschiedene separate Sensoren in einem Kraftfahrzeug, wie einen Lichtsensor für die Ansteuerung der Beleuchtungsanlage und einen Regensensor für die Ansteuerung des Scheibenwischers, in einem gemeinsamen Dachmodul aufzunehmen, das im Bereich des Innenspiegels hinter der Windschutzscheibe angeordnet ist. Zwar befinden sich diese Sensoren in einem gemeinsamen Gehäuse, so daß gegebenenfalls der Verdrahtungsaufwand verringert ist und die Plazierungsprobleme verkleinert sind. Jedoch ist weiterhin nachteilig, daß auch hier für jede realisierte Sensorfunktion ein separater Sensor notwendig ist, womit nach wie vor die Erhöhung des Komforts zu einer beträchtlichen Kostensteigerung führt.

Die JP-A-60 240 545 schließlich zeigt ein Sensorsystem zur Analyse eines vor dem Fahrzeug aufgenommenen Feldbildes. Mittels eines optischen Elements wird Licht aus der Umgebung vor dem Fahrzeug auf einen CCD(Charge-Coupled-Device)-Bildsensor geleitet. Das Signal des CCD-Bildsensors wird mittels Signalprozessoren zu einem digitalem Helligkeitsbild verarbeitet und anschließend mittels einer Bildverarbeitungseinrichtung auf Muster eines Tunnels untersucht. Wird ein Tunnel erkannt, so werden automatisch die Scheinwerfer sowie die elektrische Fensterheber aktiviert. Da dieser Sensor nur die Detektion einer Tunneleinfahrt ermöglicht, besitzt der Sensor lediglich eine einzige Funktionalität.

Der Erfindung liegt ausgehend von der JP-A-60 240 545 die Aufgabe zugrunde, ein Sensorsystem bzw. einen Sensor mit einem erweiterten Einsatzbereich anzugeben, so daß die Funktionalität des Sensors bei im wesentlichen gleichbleibenden Aufwand erhöht ist. Weiter soll die Betriebssicherheit des Sensors gesteigert werden, womit Fehlfunktionen, Fehlsteuerungen o. dgl. vermieden werden. Insbesondere soll ein für den Einsatz im Kraftfahrzeug geeigneter Sensor angegeben werden, der zur automatischen Steuerung von sowohl der Beleuchtungsanlage als auch zusätzlich der Scheibenwisch- und Scheibenwaschanlage in den im üblichen Betrieb vorkommenden Situationen geeignet ist.

Diese Aufgabe wird bei einem gattungsgemäßen Sensorsystem durch die kennzeichnenden Merkmale des Anspruchs 1 gelöst. Ein Verfahren zum Betrieb eines derartigen Sensors ist in Anspruch 7 angegeben.

Im wesentlichen wird beim erfindungsgemäßen Sensorsystem von einer ersten Umgebung des Sensorsystems stammende und von einer zweiten Umgebung des Sensorsystems reflektierte optische Strahlung auf ein einziges optoelektrisches Wandlerelement abgebildet, das aus einer linearen oder flächenhaften Anordnung von Fotoelementen besteht. Besonders vorteilhaft und kostengünstig ist die Verwendung eines Charge-Coupled-Device, eines sogenannten CCD-Empfangsarrays, als optoelektrisches Wandlerelement. Im optoelektrischen Wandlerelement wird diese optische Strahlung in ein eine ein- oder zweidimensionale Werteverteilung enthaltendes elektrisches Signalfeld umgewandelt und anschließend dieses Signalfeld auf wenigstens zwei funktionelle Abhängigkeiten zur Ansteuerung wenigstens zweier Aktoren ausgewertet, wobei es sich bei den Aktoren um die Beleuchtungsanlage in Kombination mit der Scheibenwisch- und/oder Scheibenwaschanlage handelt. Vorteilhafterweise genügt für diese beiden unterschiedlichen Sensorfunktionen ein einziges Empfangsarray zur optoelektrischen Umwandlung, so daß ein besonders platzsparendes Sensorsystem mit hoher Funktionalität resultiert, das zudem äußerst kostengünstig ist.

Weitere Ausgestaltungen der Erfindung sind Gegenstand der Unteransprüche.

Das Sensorsystem kann zur Abbildung der optischen Strahlung auf das optoelektrische Wandlerelement ein optisches Element besitzen. Weiter kann das Sensorsystem wenigstens eine Glühlampe und/oder eine Leuchtdiode und/oder einen Halbleiterlaser und/oder dergleichen zur Emission von optischer Strahlung besitzen. Diese optische Strahlung erfaßt einen Bereich der zweiten Umgebung des Sensorsystems. Ein gewisser Anteil der optischen Strahlung wird von diesem Bereich der zweiten Umgebung reflektiert, auf das optoelektrische Wandlerelement abgebildet und löst dann entsprechend der Auswertung im Sensor weitere Funktionen eines Aktors aus. Es ist dabei vorteilhaft, den direkt und indirekt reflektierten Anteil voneinander getrennt zu erfassen. Dies kann dadurch erfolgen, daß zwei Leuchtdioden o. dgl. verwendet werden, die optische Strahlung unterschiedlicher Wellenlänge emittieren oder im gepulsten Betrieb arbeiten.

Das Sensorsystem eignet sich besonders zur Verwendung in einem Kraftfahrzeug zur Steuerung der Beleuchtungsanlage. Zweckmäßigerweise ist dann der Sensor hinter der Windschutzscheibe des Kraftfahrzeugs, beispielsweise im Bereich des Innenrückspiegels angeordnet. Die aus der ersten Umgebung stammende optische Strahlung wird bei diesem Sensor mittels eines optischen Elements auf ein lineares oder flächenhaftes Empfangsarray zur optoelektrischen Umwandlung abgebildet. Die mittels des Empfangsarrays gemessene Intensitätsverteilung der optischen Strahlung wird dann derart ausgewertet, daß die statische Amplitude der Intensitätsverteilung für die Betätigung der Beleuchtungsanlage bei Dunkelheit, die dynamische Änderung der Amplitude der Intensitätsverteilung für die Betätigung der Beleuchtungsanlage bei Tunnelein- und -ausfahrten o. dgl. und die die statische Amplitude dynamisch überlagernden Impulse der Intensitätsverteilung bei eingeschalteter Beleuchtungsanlage zur Betätigung der Abblendfunktion verwendet werden. Zusätzlich können die Steigungen der dynamischen Änderung der Amplitude der Intensitätsverteilung zur Bewertung von Sichteinschränkungen herangezogen werden, so daß in Abhängigkeit hiervon die Nebelscheinwerfer und/oder Nebelschlußleuchte einschaltbar ist.

In einer Weiterbildung besitzt das Sensorsystem zusätzlich ein oder mehrere Leuchtdioden o. dgl., deren optische Strahlung für die Beleuchtung der Scheibe des Kraftfahrzeugs dient. Diese optische Strahlung ist auf einen Bereich an und/oder benachbart der Durchtrittsfläche, die die von der Umgebung stammende optische Strahlung zum Empfangsarray durchläßt, gerichtet. Die Scheibe streut einen gewissen Anteil dieser von den Leuchtdioden emittierten optischen Strahlung zurück, dessen Intensität und funktionelle Abhängigkeit gemessen und ausgewertet wird. Der direkt rückgestreute Anteil dient zur entsprechenden Ansteuerung des Scheibenwischers bei regennasser Scheibe. Der indirekte Anteil der Rückstreuung, der von der zur Durchtrittsfläche benachbarten Fläche der Scheibe stammt, weist auf eine vereiste oder verschmutzte Scheibe hin, so daß eine Betätigung der Scheibenwaschfunktion, der Scheibenheizung o. dgl. ausgelöst wird.

Beim erfindungsgemäßen Sensorsystem wird vorteilhafterweise eine die Meßgröße repräsentierende Werteverteilung erzeugt, die wiederum ein getreues Abbild der funktionellen Abhängigkeit des Aktorbetriebes von der Meßgröße darstellt. Diese Werteverteilung kann sowohl statisch als auch dynamisch ausgewertet werden, wodurch erreicht wird, daß der in der jeweiligen Situation notwendige Aktorbetrieb zielgerichtet ausgelöst werden kann. Damit bestehen die mit der Erfindung erzielten Vorteile insbesondere darin, daß ein besonders feinfühliger und sicherer Betrieb wenigstens zweier Aktoren mit einem einzigen Sensorsystem ermöglicht ist. Beim Einsatz des Sensorsystems in einem Kraftfahrzeug als Beleuchtungs- und/oder Wischsensor lassen sich alle im üblichen Betrieb vorkommenden Situationen sicher beherrschen und Fehlfunktionen vermeiden. Es ist hervorzuheben, daß bei der Lichtsteuerung der nötige Schaltvorgang bei Tunnelein- und Tunnelausfahrten genauso berücksichtigt ist, wie das Abblenden der Frontlichter bei entgegenkommenden Fahrzeugen, oder auch die Berücksichtigung von Sichtweiteneinschränkungen in der Umgebung. Durch die Messung der Scheibenrückstreuung wird der Scheibenwischer mit der erforderlichen Wischgeschwindigkeit eingeschaltet oder bei starker Verunreinigung die Waschanlage betätigt. Damit steigert das erfindungsgemäße Sensorsystem die Sicherheit sowie den Benutzerkomfort des Kraftfahrzeugsbetriebs erheblich.

Ausführungsbeispiele der Erfindung sind in den Zeichnungen dargestellt und werden im folgenden näher beschrieben. Es zeigen
- Fig. 1: ein Blockdiagramm zum Aufbau eines Sensorsystems als Prinzipskizze,
- Fig. 2: schematisch eine Fahrszene bei Annäherung eines Kraftfahrzeugs an eine Tunneleinfahrt,
- Fig. 3: die mittels des Sensorsystems gemessene Intensitätsverteilung vor einer Tunneleinfahrt entsprechend der in Fig. 2 gezeigten Fahrszene,
- Fig. 4: eine Intensitätsverteilung wie in Fig. 3 bei weiterer Annäherung an den Tunnel,
- Fig. 5: schematisch eine Fahrszene bei Annäherung eines Kraftfahrzeugs an eine Tunnelausfahrt,
- Fig. 6: die mittels des Sensorsystems gemessene Intensitätsverteilung bei Annäherung an die Tunnelausfahrt entsprechend der in Fig. 5 gezeigten Fahrszene,
- Fig. 7: die mittels des Sensorsystems gemessene Intensitätsverteilung bei Dunkelheit und Gegenverkehr,
- Fig. 8: einen Ausschnitt aus Fig. 1, wobei die Windschutzscheibe mit Regentropfen versehen ist,
- Fig. 9: die mittels des Sensorsystems gemessene Intensitätsverteilung bei nasser, vereister oder verschmutzter Windschutzscheibe,
- Fig. 10: schematisch eine allgemeine Fahrszene im Straßenverkehr,
- Fig. 11: die mittels des Sensorsystems gemessene Intensitätsverteilung entsprechend der in Fig. 10 gezeigten Fahrszene bei guter Sicht,
- Fig. 12: die erste Ableitung der Intensitätsverteilung aus Fig. 11,
- Fig. 13: eine Intensitätsverteilung wie in Fig. 11 bei schlechter Sicht und
- Fig. 14: die erste Ableitung der Intensitätsverteilung aus Fig. 13.

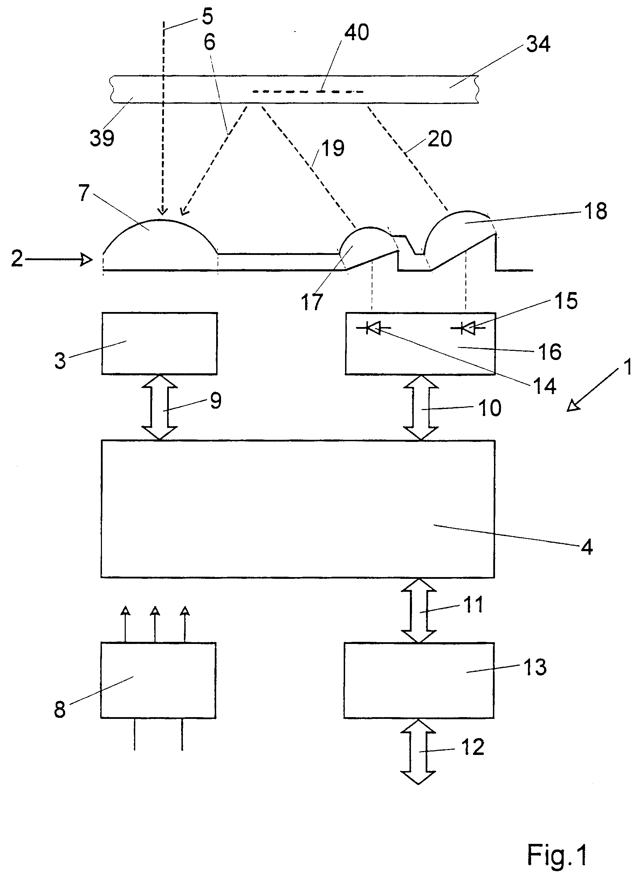

In Fig. 1 ist ein insbesondere zum Einsatz in einem Kraftfahrzeug bestimmtes Sensorsystem 1 schematisch dargestellt. Das Sensorsystem 1 dient zur Ermittlung einer Meßgröße. In funktioneller Abhängigkeit von dieser Meßgröße sind nicht weiter gezeigte Aktoren betreibbar.

Der Aufbau des Sensorsystems 1 und das Verfahren zu dessen Betrieb gehen aus der nachfolgenden Beschreibung näher hervor.

Das Sensorsystem 1, das zweckmäßigerweise hinter der Windschutzscheibe 34 des Kraftfahrzeugs, beispielsweise im Bereich des Innenrückspiegels angeordnet ist, besteht aus Mitteln zur Aufnahme von optischer Strahlung 5, 6, Mitteln zur optoelektrischen Wandlung der optischen Strahlung 5, 6 in die Meßgröße repräsentierende elektrische Signale, Mitteln zur Auswertung der elektrischen Signale auf funktionelle Abhängigkeiten der Meßgröße und Mitteln zur Erzeugung von Steuersignalen für die Aktoren. Vorliegend bestehen weiterhin die Mittel zur Aufnahme von optischer Strahlung 5, 6 aus einer in einem optischen Element 2 befindlichen optischen Empfangslinse 7. Die Mittel zur optoelektrischen Wandlung bestehen aus einem optoelektrischen Wandlerelement 3. Bei den Mitteln zur Auswertung der elektrischen Signale und zur Erzeugung der Steuersignale handelt es sich um eine Auswerteeinheit 4. An das Sensorsystem 1 ist eine elektrische Spannungsversorgung 8 zum Betrieb des Sensorsystems 1 angeschlossen.

Das Sensorsystem 1 erfaßt aus der Umgebung vor dem Kraftfahrzeug, die nachfolgend erste Umgebung genannt wird, stammende optische Strahlung 5. Ein Teil der optischen Strahlung 5 wird von der Empfangslinse 7, soweit sie im Erfassungsbereich der Empfangslinse 7 einfällt, auf das optoelektrische Wandlerelement 3 abgebildet. Das optoelektrische Wandlerelement 3 besteht aus einer der Empfangslinse 7 im optischen Element 2 zugeordneten, linearen oder flächenhaften Anordnung von Fotoelementen. Bei den Fotoelementen kann es sich um Fotodioden, Fototransistoren o. dgl. handeln, die ein der jeweiligen Intensität der optischen Strahlung 5, die auf das einzelne Fotoelement fällt, entsprechendes elektrisches Signal abgeben. Es bietet sich insbesondere an, als optoelektrisches Wandlerelement 3 eine integrierte Schaltung von Charge-coupled-devices, ein sogenanntes CCD-Empfangsarray, zu wählen. Folglich wird im optoelektrischen Wandlerelement 3 die optische Strahlung 5 in ein elektrisches Signalfeld derart umgewandelt, daß das Signalfeld eine einen Bereich der ersten Umgebung repräsentierende Werteverteilung enthält. Insbesondere besitzt das elektrische Signalfeld eine ein- oder zweidimensionale Werteverteilung.

Das elektrische Signalfeld repräsentiert die vom Sensorsystem 1 ermittelte Meßgröße und wird über Leitungen 9 an die Auswerteeinheit 4, die beispielsweise einen Mikroprozessor enthält, weitergeleitet. In der Auswerteeinheit 4 wird die Werteverteilung des elektrischen Signalfeldes statisch und/oder dynamisch auf wenigstens zwei funktionelle Abhängigkeiten für wenigstens zwei voneinander verschiedene Aktoren ausgewertet. Entsprechend dieser Auswertung erzeugt die Auswerteeinheit 4 Steuersignale, die über Leitungen 11 einer Schnittstelleneinheit 13 zugeführt werden. In der Schnittstelleneinheit 13 werden die Steuersignale in Bussignale umgewandelt, die über einen Bus 12 im Kraftfahrzeug dann dem jeweiligen Aktor zu dessen Betrieb zugeführt werden. Bei dem Bus 12 kann es sich um den bekannten CAN-Bus o. dgl. handeln. Genausogut kann die Schnittstelleneinheit 13 auch unmittelbar Leistungsschalter o. dgl. für die Betätigung der Aktoren enthalten.

In einer erweiterten Ausgestaltung kann das Sensorsystem 1 von einer zweiten Umgebung des Kraftfahrzeugs reflektierte optische Strahlung erfassen und auswerten. Die zweite Umgebung ist bevorzugt ein Fahrzeugteil am Kraftfahrzeug. Vorliegend handelt es sich bei dem Fahrzeugteil um eine Scheibe des Kraftfahrzeugs und zwar bevorzugt um die Windschutzscheibe 34.

Die optische Strahlung, die von der zweiten Umgebung reflektiert wird, wird im Sensorsystem 1 erzeugt. Hierzu besitzt das Sensorsystem 1 eine Leuchtdiode 14, die sich in einem Sendeblock 16 befindet. Der Sendeblock 16 wird beispielsweise über eine Leitung 10 von der Auswerteeinheit 4 zum Betrieb der Leuchtdiode 14 angesteuert. Anstelle einer Leuchtdiode kann selbstverständlich auch ein sonstiges elektrooptisches Bauteil, das optische Strahlung emittieren kann, Verwendung finden. Beispielsweise kann hierfür auch eine Glühlampe, ein Halbleiterlaser o. dgl. in Betracht kommen. Die von der Leuchtdiode 14 emittierte Strahlung 19 wird von einer optischen Linse 17, die sich im optischen Element 2 befindet, auf den auszuleuchtenden Bereich der zweiten Umgebung gerichtet. Der von der zweiten Umgebung reflektierte und von der Empfangslinse 7 erfaßte Anteil 6 der optischen Strahlung 19 wird somit von der Empfangslinse 7 auf das optoelektrische Wandlerelement 3 abgebildet und dann zur Auswertung der Auswerteeinheit 4 zugeführt.

Der Sendeblock 16 des Sensorsystems 1 kann noch eine weitere Leuchtdiode 15 zur Emission optischer Strahlung 20 enthalten. Die optische Strahlung 20 wird mittels einer im optischen Element 2 befindlichen optischen Linse 18 auf einen Bereich der zweiten Umgebung, der dem durch die Leuchtdiode 14 ausgeleuchteten Bereich benachbart ist, gerichtet. Von dieser optischen Strahlung 20 wird ein gewisser Anteil 40 in der Windschutzscheibe 34 diffus geführt und im Erfassungsbereich der Empfangslinse 7 schließlich als von der zweiten Umgebung indirekt reflektierter Anteil auf das optoelektrische Wandlerelement 3 abgebildet. Bei Ausleuchtung der zweiten Umgebung durch die beiden Leuchtdioden 14, 15 setzt sich der Anteil 6 an optischer Strahlung somit aus dem direkt und dem indirekt reflektierten Anteil der optischen Strahlung 19, 20 zusammen. Damit die Auswerteeinheit 4 zwischen dem direkt reflektierten Anteil und dem indirekt reflektierten Anteil sowie zwischen der aus der ersten Umgebung aufgenomenen optischen Strahlung 5 unterscheiden kann, bietet es sich beispielsweise an, daß die Bauteile 14, 15 optische Strahlung 19, 20 mit unterschiedlicher Wellenlänge emittieren. Alternativ können die Bauteile 14, 15 auch im gepulsten Betrieb arbeiten. Der indirekt reflektierte Anteil wird ebenfalls der Auswerteeinheit 4 zur Auswertung zugeführt.

Im folgenden sollen nun verschiedene Ausführungsformen von Sensoren der beschriebenen Ausgestaltung zum Einsatz in einem Kraftfahrzeug und deren Arbeitsweise näher erläutert werden.

Das Sensorsystem 1 kann als Sensor zur Steuerung der Beleuchtungsanlage eines Kraftfahrzeugs dienen. Das Sensorsystem 1 nimmt über die Empfangslinse 7 optische Strahlung 5 der vor dem Kraftfahrzeug befindlichen Umwelt, also von der ersten Umgebung auf und bildet diese optische Strahlung 5 auf das aus einem linearen oder flächenhaften Empfangsarray bestehende optoelektrische Wandlerelement 3 ab. Die mittels des Empfangsarrays als Pixelbild gemessene Intensitätsverteilung der optischen Strahlung 5 stellt das elektrische Signalfeld dar. Die Intensitätsverteilung wird anschließend in der Auswerteeinheit 4 anhand ihrer statischen Amplitude und der dynamischen Änderung ihrer Amplitude ausgewertet.

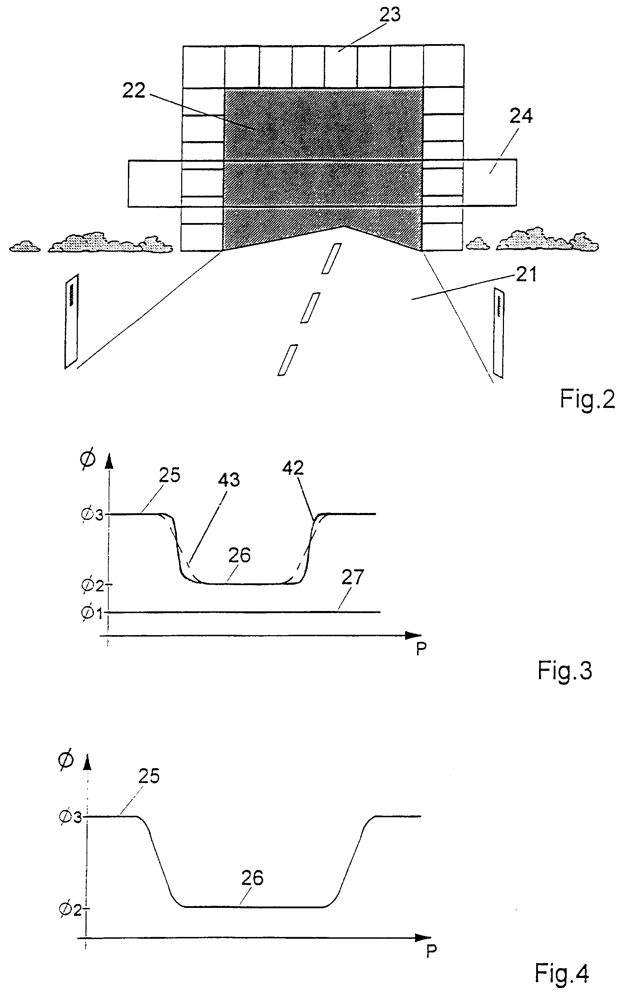

In Fig. 2 ist die vor dem Kraftfahrzeug befindliche erste Umgebung bei Annäherung an eine Tunneleinfahrt als Fahrszene zu sehen. Die Fahrbahn 21 führt in den inneren Tunnelbereich 22, der von einer Tunnelausmauerung 23 umgeben ist. Der innere Tunnelbereich 22 ist dunkler als die Tunnelausmauerung 23 und die Außenwelt um den Tunnel. Beispielsweise wird der Bereich 24 der ersten Umgebung durch die optische Strahlung 5 auf das lineare oder flächenhafte Empfangsarray abgebildet, wobei in Fig. 3 die zugehörige Intensitäts- bzw. Helligkeitsverteilung Φ als Ordinate in Abhängigkeit von den Pixeln P als Abszisse dargestellt ist. Der hellere Bereich der Außenwelt um den Tunnel führt zu einer Kurve 25 mit einer Amplitude Φ3, während der dunkle innere Tunnel bereich einer Kurve 26 mit einer niedrigeren Amplitude Φ2 entspricht. Damit erhält man eine Intensitätsverteilung, die eine Kurve 25 mit höherem Niveau und eine darin befindliche Vertiefung von angenähert trapezförmiger Gestalt besitzt. Falls gewünscht, kann die in Pixelgestalt vorliegende Verteilung in der Auswerteeinheit 4 noch entsprechend interpoliert werden, um gegebenenfalls für die Auswertung noch benötigte Zwischenwerte oder einen geglätteten Kurvenverlauf zu erhalten. Fährt das Kraftfahrzeug weiter auf den Tunnel zu, so wächst die Anzahl der Pixel, die die niedrige Amplitude Φ2 besitzen. Man erhält dann die in Fig. 4 beispielhaft gezeigte Intensitätsverteilung Φ. Anhand eines Vergleichs zwischen den Fig. 3 und 4 ist ersichtlich, daß bei weiterer Annäherung an den Tunnel die Breite der trapezförmigen Vertiefung in der Intensitätsverteilung Φ und damit die Kurve 26 wächst, während die Ausdehnung der Kurve 25 abnimmt. Aufgrund dieses dynamischen Anwachsens der Vertiefung entsprechend der Kurve 26 in der Intensitätsverteilung Φ erkennt die Auswerteeinheit 4 die Annäherung an eine Tunneleinfahrt und erzeugt ein Steuersignal zum Einschalten der Beleuchtungsanlage am Kraftfahrzeug.

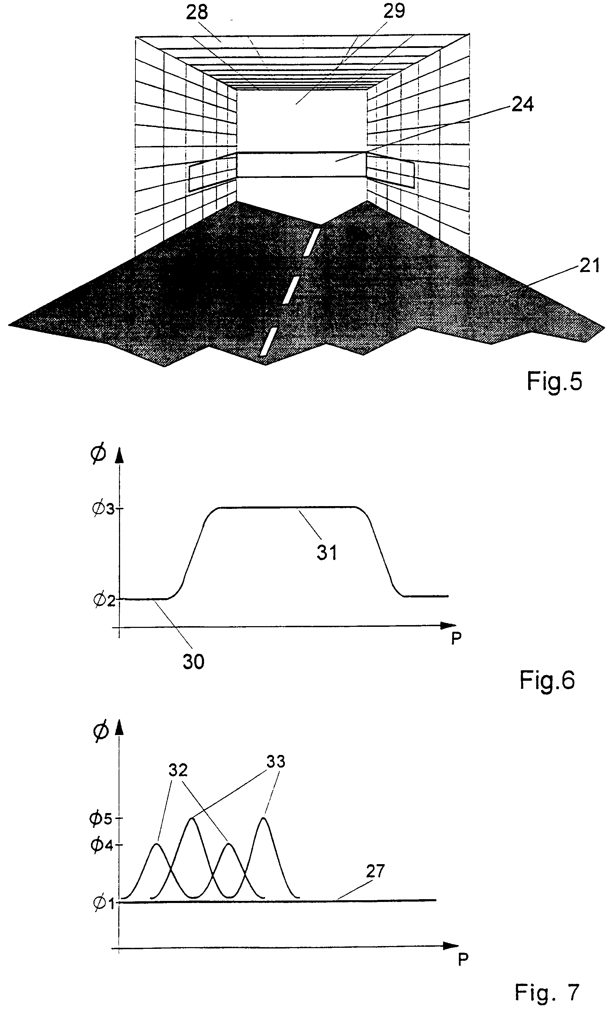

Befindet sich das Kraftfahrzeug im Tunnel, so erhält man eine im wesentlichen konstant erscheinende, entsprechend der Kurve 27 verlaufende Intensitätsverteilung Φ mit geringer Amplitude Φ1, wie sie in Fig. 3 beispielhaft angedeutet ist. Diese Amplitude Φ1 unterschreitet einen vorgegebenen Grenzwert, so daß die Beleuchtungsanlage eingeschaltet bleibt. Wie in Fig. 7 gezeigt ist, erhält man eine vergleichbare Intensitätsverteilung gemäß der Kurve 27 mit Amplitude Φ1 auch außerhalb eines Tunnels, falls die Außenhelligkeit abnimmt. Ergibt die Auswertung der statischen Amplitude der Intensitätsverteilung eine Unterschreitung eines bestimmten Grenzwertes durch die Amplitude Φ1, so stellt dies das Kriterium zum Einschalten der Beleuchtungsanlage aufgrund zu geringer Helligkeit dar. Umgekehrt kann bei Überschreiten eines weiteren, gegebenenfalls höheren Grenzwertes durch die Amplitude der Intensitätsverteilung entsprechend der Kurve 27 ein Ausschalten der Beleuchtungsanlage wegen genügender Außenhelligkeit ausgelöst werden.

In Fig. 5 ist weiter die Fahrszene bei Annäherung an den Tunnelausgang zu sehen. Ein Teil der vor dem Kraftfahrzeug befindlichen ersten Umgebung besteht aus der dunklen Tunnelinnenseite 28 und der andere Teil aus der hellen Außenwelt des Tunnelausgangs 29. Wiederum wird der Bereich 24 der ersten Umgebung auf das lineare oder flächenhafte Empfangsarray abgebildet. In Fig. 6 ist die Intensitätsverteilung Φ der entsprechend der Fahrszene von Fig. 5 aufgenommenen optischen Strahlung 5 dargestellt. Die dunkle Tunnelinnenseite 28 besitzt eine niedrige Amplitude Φ2 entsprechend der Kurve 30 während die helle Außenwelt am Tunnelausgang 29 eine hohe Amplitude Φ3 gemäß der Kurve 31 aufweist. Man erhält eine Intensitätsverteilung, die im wesentlichen zu der in Fig. 3 gezeigten Intensitätsverteilung invers ist. Die Intensitätsverteilung Φ besitzt eine ungefähr trapezförmige Erhöhung entsprechend der Kurve 31, die sich bei Annäherung an den Tunnelausgang 29 weiter verbreitert. Aufgrund dieses dynamischen Anwachsens der Kurve 31 erzeugt die Auswerteeinheit 4 ein Steuersignal zum Ausschalten der Beleuchtungsanlage am Kraftfahrzeug.

Ist die Beleuchtungsanlage bei Dunkelheit eingeschaltet, weil die Amplitude Φ1 entsprechend der Kurve 27 einen Grenzwert unterschritten hat, wie in Fig. 7 dargestellt ist, so kann der Sensor auch die Abblendfunktion auslösen. Ohne Gegenverkehr stellt sich die im wesentlichen konstante Amplitude Φ1 für die Intensitätsverteilung ein, wobei dann das Fernlicht an der Beleuchtungsanlage des Kraftfahrzeugs eingeschaltet ist. Bei herannahendem Gegenverkehr bewirkt die optische Strahlung der Scheinwerfer des entgegenkommenden Fahrzeugs die Ausbildung von spitzenartigen Peaks oder Impulsen 32 mit einer höheren Amplitude Φ4 in der Intensitätsverteilung. Erkennbar ragen diese Impulse 32 deutlich aus der Kurve 27 heraus. Bei weiterer Annäherung des entgegenkommenden Fahrzeugs wandern diese Impulse 32 von dem die Fahrbahnmitte repräsentierenden Pixelbereich des Empfangsarrays zu dem den Fahrbahnrand des Empfangsarrays repräsentierenden Pixelbereich und stellen sich dort als Impulse 33 dar. Diese Impulse 33 besitzen eine höhere Amplitude Φ5. Aufgrund der Auswertung der Intensitätsverteilung bei eingeschalteter Beleuchtungsanlage, bei der die statische Amplitude Φ1 von Impulsen 32, 33 mit den Amplituden Φ4, Φ5 dynamisch überlagert ist, wird von der Auswerteeinheit 4 ein Steuersignal zum Abblenden der Beleuchtungsanlage erzeugt. Die Auswertung in der Auswerteeinheit 4 läßt sich noch weiter verfeinern, indem das dynamische Wandern der Impulse 32 zu dem den Fahrbahnrand des Empfangsarrays repräsentierenden Pixelbereich bewertet wird. Daraus läßt sich die Entfernung des entgegenkommenden Fahrzeugs und damit der Zeitpunkt für das Abblenden feinfühliger bestimmen.

Durch eine weitere Auswertung des elektrischen Signalfeldes lassen sich auch Sichtweitenbeschränkungen durch mangelnden Kontrast erkennen, was beispielsweise bei Vorliegen oder Auftreten von Nebel der Fall ist. Ist die Sicht schlecht, so erhält man eine im Verlauf der Intensitätsverteilung Φ geringere Steigung 43 zwischen den Kurven 25 und 26, wie in Fig. 2 mit gestrichelten Linien eingezeichnet ist. Im Vergleich dazu ist die Steigung 42 bei guter Sicht mit durchgezogener Linie eingetragen. Die Auswertung der Steigung 42, 43 läßt eine Bewertung zu, inwieweit Sichteinschränkungen durch mangelnden Kontrast vorliegen sowie die Größe der jeweilig vorhandenen Sichtweite. In Abhängigkeit von dieser Bewertung kann wiederum die Beleuchtungsanlage eingeschaltet werden. Bei Vorliegen von Nebel mit geringer Sichtweite können außerdem die Nebelscheinwerfer und/oder eine Nebelschlußleuchte eingeschaltet werden.

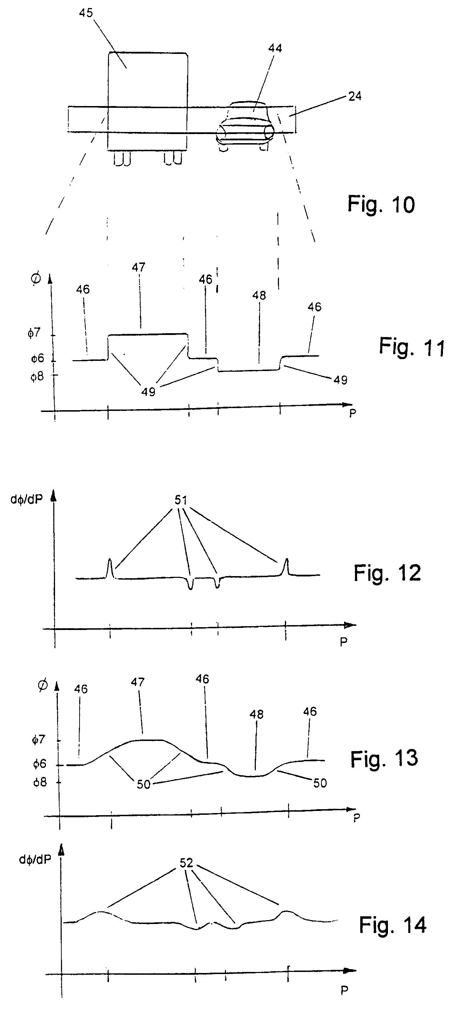

Die Funktion der Kontrasterkennung soll noch in einer allgemeinen Fahrszene des Straßenverkehrs, wie in Fig. 10 gezeigt, näher erläutert werden. Wie dort zu sehen ist, können sich vor dem Kraftfahrzeug und damit in einer ersten Umgebung vorausfahrende oder auch entgegenkommende Personenkraftwagen 44 sowie Lastkraftwagen 45 befinden. In Fig. 11 ist nunmehr die Intensitätsverteilung Φ entsprechend einem Bereich 24 bei guter Sicht für diese Verkehrssituation näher gezeigt. Man erhält eine von der Grundhelligkeit herrührende Intensität Φ6 entsprechend der Kurve 46, im Bereich des Lastkraftwagens 45 eine Intensität Φ7 gemäß Kurve 47 und eine Intensität Φ8 entsprechend der Kurve 48 im Bereich des Personenkraftwagens 44. Die Kurven 46, 47 und 48 werden bei guter Sicht durch steil verlaufende Steigungen 49 verbunden. Bildet man nun die erste Ableitung dΦ/dP der Intensitätsverteilung Φ gemäß Fig. 11, d.h. differenziert man die Intensitätsverteilung Φ über die Pixel P zur Bildung des ersten Differentialquotienten dΦ/dP, so erhält man den in Fig. 12 gezeigten Kurvenverlauf. Wie in Fig. 12 zu sehen ist, besitzt die erste Ableitung dΦ/dP im Bereich der Steigungen 49 scharfe Spitzen oder steile Peaks 51. Ist die Sicht schlecht, so verlaufen die Steigungen 50 weniger steil und eher unscharf, wie in Fig. 13 zu sehen ist. Bildet man wiederum die erste Ableitung dΦ/dP der Intensitätsverteilung Φ aus Fig. 13, d.h. differenziert man die Intensitätsverteilung Φ nach den Pixeln P zur Bildung des ersten Differentialquotienten dΦ/dP, so erhält man im Bereich der Steigungen 50 unscharfe oder verwaschene Peaks 52, wie in Fig. 14 gezeigt ist. Durch die Bewertung der Peaks 51, 52 aus der nach den Pixeln P einmal differenzierten Intensitätsverteilung Φ lassen sich also Sichtweiteneinschränkungen ermitteln und damit die erforderlichen Maßnahmen ergreifen.

Zusammenfassend läßt sich für die Steuerung der Beleuchtungsanlage durch den Sensor feststellen, daß die statische Amplitude der Intensitätsverteilung für die Betätigung der Beleuchtungsanlage bei Dunkelheit und die dynamische Änderung der Amplitude der Intensitätsverteilung für die Betätigung der Beleuchtungsanlage bei Tunnelein- und Tunnelausfahrten o. dgl. ausgewertet wird. Weiter können die die statische Amplitude dynamisch überlagernden Impulse der Intensitätsverteilung bei eingeschalteter Beleuchtungsanlage zur Betätigung der Abblendfunktion verwendet werden. Noch weiter läßt sich die Steigung oder Ableitung der dynamischen Änderung der Amplitude zur Bewertung von Sichteinschränkungen durch mangelnden Kontrast verwenden.

Das Sensorsystem 1 kann weiter als Sensor zur Steuerung der Scheibenwisch- und/oder Scheibenwaschanlage des Kraftfahrzeugs dienen. Hierzu enthält das Sensorsystem 1 eine Leuchtdiode 14, wie in Fig. 1 zu sehen ist. Die Leuchtdiode 14 wird von der Auswerteeinheit 4 derart angesteuert, daß sie einzelne Impulse von optischer Strahlung 19 abgibt. Diese Impulse sind mittels der Linse 17 im optischen Element 2 derart auf die Windschutzscheibe 34 gerichtet, daß die Windschutzscheibe 34 an der Durchtrittsfläche 39 oder in deren unmittelbarer Nähe, an der die optische Strahlung 5 aus der ersten Umgebung zum Empfangsarray durchtritt, beleuchtet wird. Ein Teil 6 der optischen Strahlung 19 wird direkt rückgestreut und über die Empfangslinse 7 auf das als Empfangsarray ausgebildete optoelektrische Wandlerelement 3 abgebildet, so daß die Intensität und funktionelle Abhängigkeit der Rückstreuung der optischen Strahlung 19 an der Windschutzscheibe 34 gemessen wird.

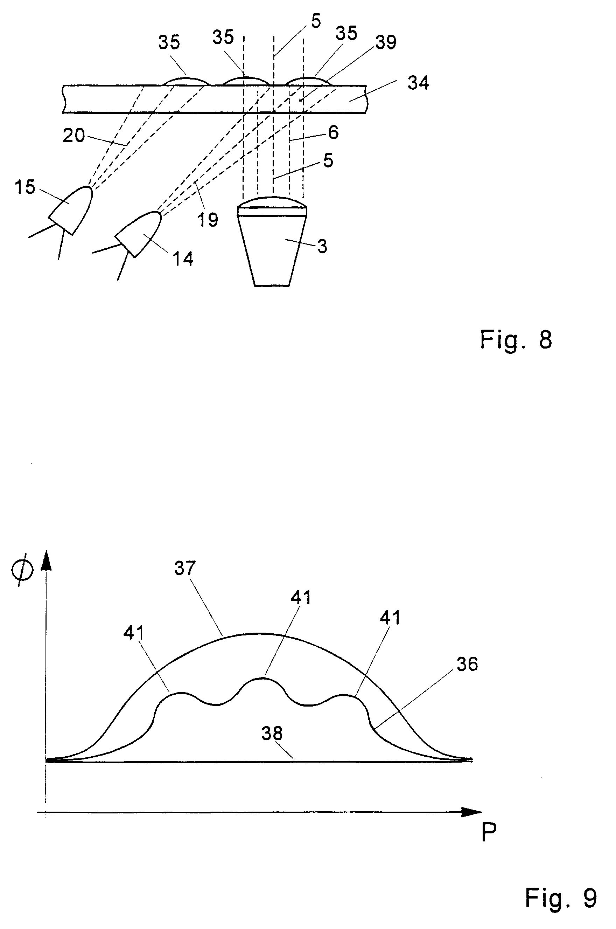

Ist die Windschutzscheibe 34 mit Regentropfen 35 benetzt, wie in Fig. 8 zu sehen ist, so verändert sich die mittels des Empfangsarrays gemessene, in Fig. 9 näher gezeigte Intensitätsverteilung Φ aufgrund der Rückstreuung. In einer Impulspause, wenn die Leuchtdiode 14 nicht aktiv ist, findet keine Rückstreuung an der Windschutzscheibe 34 statt, so daß lediglich die aus der ersten Umgebung aufgenommene optische Strahlung 5 vom Sensor gemessen wird und die Intensitätsverteilung einen im wesentlichen konstanten Verlauf entsprechend der Kurve 38 besitzt. Wird ein Impuls von der Leuchtdiode 14 ausgesandt, so findet eine Rückstreuung der optischen Strahlung 19 an den Regentropfen 35 und der Windschutzscheibe 34 statt, wobei der Anteil 6 der Rückstreuung zusätzlich zur optischen Strahlung 5 aus der ersten Umgebung gemessen wird. Am Empfangsarray wird dann ein Verlauf der Intensitätsverteilung entsprechend der Kurve 36 gemessen. Die Regentropfen 35 bewirken bei der Rückstreuung charakteristische nebeneinanderliegende Höcker 41 in der Kurve 36, wobei die Anzahl der Höcker 41 ein Maß für den Benetzungsgrad der Windschutzscheibe 34 ist. Aufgrund der Auswertung der Kurve 36 in der Auswerteeinheit 4 wird der Scheibenwischer für die Windschutzscheibe 34 angesteuert, d.h. bei Bedarf eingeschaltet und gegebenenfalls auch die Geschwindigkeit des Scheibenwischers gesteuert. Selbstverständlich kann der Sensor auch zur Ansteuerung eines Scheibenwischers an einer sonstigen Scheibe des Kraftfahrzeugs, beispielsweise der Heckscheibe dienen.

Wie in Fig. 1 und 8 zu sehen ist, kann eine weitere Leuchtdiode 15 im Sendeblock 16 derart angeordnet sein, daß über die Linse 18 im optischen Element 2 die Windschutzscheibe 34 benachbart zur Durchtrittsfläche 39 mittels optischer Strahlung 20 beleuchtbar ist. Auch die optische Strahlung 20 kann wiederum in Form von einzelnen Impulsen emittiert werden, so daß in den Impuls-Pausen wiederum die Kurve 38 am Empfangsarray gemessen wird. Ist die Windschutzscheibe 34 frei, so befindet sich der an der Windschutzscheibe 34 rückgestreute Anteil der optischen Strahlung 20 nicht im Erfassungsbereich der Empfangslinse 7 und die rückgestreute Strahlung kann folglich keine Signaländerung am Empfangsarray bewirken. Ist die Windschutzscheibe 34 jedoch verschmutzt oder vereist, so findet eine diffuse Weiterleitung eines gewissen Anteils 40 der optischen Strahlung 20 in der Windschutzscheibe 34 statt, was im Bereich der Durchtrittsfläche 39 zu einer teilweisen indirekten Rückstreuung der optischen Strahlung 20 in Richtung der Empfangslinse 7 führt. Dieser indirekt rückgestreute Teil der optischen Strahlung 20 wird wiederum im Empfangsarray registriert und ergibt die in Fig. 9 dargestellte Kurve 37. Damit kann durch die Auswertung der funktionellen Abhängigkeit der Intensitätsverteilung ohne Rückstreuung, mit direkter Rückstreuung und mit indirekter Rückstreuung gemäß den Kurven 38, 36, 37 die Betätigung der Scheibenwasch- und/oder Scheibenwischfunktion sowie gegebenenfalls die Beheizung der Scheibe gesteuert werden.

Der gepulste Betrieb der Leuchtdioden 14, 15 wird vorzugsweise gewählt, um die Kurven 36, 37, 38 in der Auswerteeinheit 4 unterscheiden zu können. Alternativ können die Leuchtdioden 14, 15 auch optische Strahlung unterschiedlicher Wellenlänge emittieren, wobei dann getrennte, für die jeweilige Wellenlänge empfindliche optoelektrische Wandlerelemente oder Filter verwendet werden. Will man Benetzungsgrade und Tröpfchengröße zur Steuerung der Scheibenwisch- und Scheibenwaschanlage ermitteln, so kann man mit mehreren Leuchtdioden 14, 15 verschiedener Wellenlängen die Auswertung noch weiter verfeinern.

Bevorzugterweise ist das Sensorsystem 1 als kombinierter Sensor zur Steuerung sowohl der Beleuchtung als auch der Scheibenwisch- und/oder Scheibenwaschanlage ausgestaltet. Auch hierbei besitzt der Sensor lediglich ein einziges lineares oder flächenhaftes Empfangsarray zur optoelektrischen Umwandlung. Vorteilhafterweise ist weiter bei geeigneten Betrieb des Sensors lediglich eine Empfangslinse 7 und eine Auswerteeinheit 4 für sämtliche Sensorfunktionen notwendig, so daß trotz gesteigerter Funktionalität des Sensorsystems 1 eine beträchtliche Kosteneinsparung erzielbar ist. Damit gestattet das kombinierte Sensorsystem 1 zum einen die Ansteuerung der Beleuchtungsanlage in Abhängigkeit von wenigstens einer der folgenden Funktionen, nämlich Detektion der Umgebungshelligkeit, von Tunnelein-und Tunnelausfahrten, von weiteren beleuchteten Fahrzeugen für das Abblenden oder einer Sichtweiteneinschränkung durch mangelnden Kontrast. Zum anderen gestattet das kombinierte Sensorsystem 1 zusätzlich die Ansteuerung der Wisch- und/oder Waschanlage in Abhängigkeit von wenigstens einer der weiteren folgenden Funktionen, nämlich Detektion von Feuchtigkeit bzw. Regentropfen auf der Scheibe, einer inneren oder äußeren Scheibenverschmutzung oder eines Scheibenbelages.

Die Erfindung ist nicht auf die beschriebenen und dargestellten Ausführungsbeispiele beschränkt. Sie umfaßt vielmehr auch alle fachmännischen Weiterbildungen im Rahmen des Erfindungsgedankens. So kann ein derartiges Sensorsystem nicht nur in Kraftfahrzeugen eingesetzt werden, sondern kann auch in sonstigen Verkehrsmitteln, beispielsweise bei Flugzeugen, Lokomotiven o. dgl., sowie zur Steuerung sonstiger Aktoren in Maschinen o. dgl. Verwendung finden.

### Bezugszeichen-Liste:

- 1:: Sensorsystem
- 2:: optisches Element
- 3:: optoelektrisches Wandlerelement / Mittel zur optoelektrischen Wandlung
- 4:: Auswerteeinheit / Mittel zur Auswertung
- 5:: optische Strahlung (von erster Umgebung)
- 6:: Anteil an optischer Strahlung (von zweiter Umgebung)
- 7:: Empfangslinse
- 8:: Spannungsversorgung
- 9,10,11:: Leitung
- 12:: Bussystem
- 13:: Schnittstelleneinheit
- 14,15:: Leuchtdiode
- 16:: Sendeblock
- 17,18:: optische Linse
- 19,20:: optische Strahlung (erzeugt von Leuchtdiode im Sensor)
- 21:: Fahrbahn
- 22:: Tunnelbereich
- 23:: Tunnelausmauerung
- 24:: Bereich (der ersten Umgebung)
- 25:: Kurve (mit Amplitude Φ3)
- 26:: Kurve (mit Amplitude Φ2)
- 27:: Kurve (mit Amplitude Φ1)
- 28:: Tunnelinnenseite
- 29:: Tunnelausgang
- 30:: Kurve (mit Amplitude Φ2)
- 31:: Kurve (mit Amplitude Φ3)
- 32,33:: Impuls
- 34: : Windschutzscheibe
- 35:: Regentropfen
- 36:: Kurve (bei Regentropfen)
- 37:: Kurve (bei Vereisung und/oder Verschmutzung)
- 38:: Kurve (ohne Rückstreuung)
- 39:: Durchtrittsfläche (an Windschutzscheibe)
- 40:: Anteil (an indirekt reflektierter optischer Strahlung)
- 41:: Höcker (von Regentropfen)
- 42:: Steigung (der Amplitude bei guter Sicht)
- 43:: Steigung (der Amplitude bei schlechter Sicht)
- 44:: Personenkraftwagen
- 45:: Lastkraftwagen
- 46:: Kurve (Grundhelligkeit)
- 47:: Kurve (bei Lastkraftwagen)
- 48:: Kurve (bei Personenkraftwagen)
- 49:: Steigung (bei guter Sicht)
- 50:: Steigung (bei schlechter Sicht)
- 51:: Peak (bei guter Sicht)
- 52:: Peak (bei schlechter Sicht)

## Patentansprüche

1. Sensorsystem für ein Kraftfahrzeug zur Ermittlung einer Meßgröße, mit Mitteln zur Aufnahme von aus einer ersten Umgebung des Sensorsystems (1) stammenden optischen Strahlung (5), mit als Empfangsarray aus einer linearen oder flächenhaften Anordnung von Fotoelementen, wie Fotodioden, Fototransistoren o. dgl., insbesondere als CCD(Charge-Coupled-Device)-Empfangsarray ausgebildeten Mitteln (3) zur optoelektrischen Wandlung der optischen Strahlung (5) in die Meßgröße repräsentierende elektrische Signale, wobei die elektrischen Signale ein Signalfeld mit einer ein- oder zweidimensionalen, einen Bereich der ersten Umgebung repräsentierenden Werteverteilung besitzen, mit Mitteln (4) zur Auswertung der elektrischen Signale auf funktionelle Abhängigkeiten der Meßgröße, und mit Mitteln zur Erzeugung von Steuersignalen für Aktoren derart, daß die Aktoren in funktioneller Abhängigkeit von der Meßgröße betreibbar sind, dadurch gekennzeichnet, daß von den Mitteln zur Aufnahme optischer Strahlung weiter aus einer zweiten Umgebung des Sensorsystems (1) reflektierte optische Strahlung (6) aufnehmbar ist, daß das Sensorsystem (1) lediglich ein einziges Empfangsarray besitzt, derart daß das Signalfeld weiter eine den Bereich der zweiten Umgebung repräsentierende Werteverteilung besitzt, daß die Mittel (4) zur Auswertung die Werteverteilung des elektrischen Signalfeldes statisch und/oder dynamisch auf wenigstens zwei funktionelle Abhängigkeiten auswerten, und daß die entsprechend der Auswertung der Werteverteilung erzeugten Steuersignale zur Ansteuerung von wenigstens zwei Aktoren dienen, bei denen es sich um die Beleuchtungsanlage in Kombination mit der Scheibenwisch- und/oder Scheibenwaschanlage handelt.

2. Sensorsystem nach Anspruch 1, dadurch gekennzeichnet, daß die Mittel zur Aufnahme der optischen Strahlung aus einem optischen Element (2) zur Abbildung der optischen Strahlung (5, 6) auf die Mittel (3) zur optoelektrischen Wandlung bestehen, daß vorzugsweise das Sensorsystem (1) wenigstens ein optische Strahlung (19, 20) emittierendes, elektrooptisches Bauteil (14, 15), wie eine Glühlampe, eine Leuchtdiode, einen Halbleiterlaser o. dgl. besitzt, wobei die emittierte optische Strahlung (19, 20) einen Bereich der zweiten Umgebung des Sensorsystems (1) erfaßt sowie der von diesem Bereich der zweiten Umgebung reflektierte Anteil (6) der optischen Strahlung (19, 20) auf die Mittel (3) zur optoelektrischen Wandlung abbildbar ist, und wobei weiter vorzugsweise der direkt und indirekt reflektierte Anteil (6, 40) voneinander getrennt erfaßbar sind, und daß noch weiter vorzugsweise die elektrooptischen Bauteile (14, 15), die gegebenenfalls optische Strahlung (19, 20) unterschiedlicher Wellenlänge emittieren können, im gepulsten Betrieb arbeiten.

3. Sensorsystem für ein Kraftfahrzeug zur Steuerung der Beleuchtungsanlage und/oder des Scheibenwischers, nach Anspruch 1 oder 2, dadurch gekennzeichnet, daß das Sensorsystem eine optische Empfangslinse (7), die optische Strahlung (5, 6) der Umgebung vor dem Kraftfahrzeug und/oder von einem im bzw. benachbart zum Erfassungsbereich der optischen Empfangslinse (7) befindlichen Fahrzeugtell, bei dem es sich insbesondere um eine Scheibe (34) des Kraftfahrzeugs handelt, auf ein lineares oder flächenhaftes Empfangsarray zur optoelektrischen Umwandlung abbildet, und wenigstens ein optische Strahlung (19, 20) emittierendes, elektrooptisches Bauteil (14, 15) für die Beleuchtung dieses Fahrzeugteils besitzt, wobei die mittels des Empfangsarrays gemessene Intensitätsverteilung (Þ) der optischen Strahlung (5, 6) derart ausgewertet wird, daß die statische Amplitude der Intensitätsverteilung (Þ) für die Betätigung der Beleuchtungsanlage bei Dunkelheit, die dynamische Änderung der Amplitude der Intensitätsverteilung (Þ) für die Betätigung der Beleuchtungsanlage bei Tunnelein- und Tunnelausfahrten o. dgl. und die die statische Amplitude dynamisch überlagernden Impulse (32, 33) der Intensitätsverteilung (Þ) bei eingeschalteter Beleuchtungsanlage zur Betätigung der Abblendfunktion verwendet werden, und wobei gegebenenfalls das dynamische Wandern der Impulse (32, 33) auf dem Empfangsarray zur Bestimmung des Zeitpunktes für das Abblenden herangezogen wird.

4. Sensorsystem nach Anspruch 3, dadurch gekennzeichnet, daß die mittels des Empfangsarrays gemessene Intensitätsverteilung (Þ) der optischen Strahlung (5, 6) derart ausgewertet wird, daß die Steigungen (49, 50) der dynamischen Änderung der Amplitude, insbesondere durch Differenzierung über die Pixel (P) des Empfangsarrays für die Bildung der ersten Ableitung bzw. des ersten Differentialquotienten (dÞ/dP) sowie der daraus resultierenden Peaks (51, 52), zur Bewertung von Sichteinschränkungen durch mangelnden Kontrast, insbesondere des Vorliegens von Nebel, verwendet werden, wobei in Abhängigkeit von einer Sichteinschränkung die Beleuchtungsanlage, insbesondere Nebelscheinwerfer und/oder eine Nebelschlußleuchte, einschaltbar ist.

5. Sensorsystem für ein Kraftfahrzeug nach Anspruch 3 oder 4, dadurch gekennzeichnet, daß mittels der elektrooptischen Bauteile (14, 15), die gegebenenfalls optische Strahlung (19, 20) unterschiedlicher Wellenlänge emittieren, die Scheibe (34) des Kraftfahrzeugs an und/oder benachbart der Durchtrittsfläche (39) für die von der Umgebung stammende optische Strahlung (5) zum Empfangsarray beleuchtbar ist, daß die Intensität und funktionelle Abhängigkeit der Rückstreuung der optischen Strahlung (19, 20) an der Scheibe (34) des Kraftfahrzeugs gemessen und ausgewertet wird zur entsprechenden Ansteuerung des Scheibenwischers und daß weiter vorzugsweise die funktionelle Abhängigkeit zwischen der direkten und indirekten Rückstreuung (6, 40) der optischen Strahlung (19, 20) an der Durchtrittsfläche (39) und der der Durchtrittsfläche (39) benachbarten Fläche der Scheibe (34) zur Betätigung der Scheibenwaschfunktion, der Scheibenheizung o. dgl. verwendet wird.

6. Sensorsystem für ein Kraftfahrzeug nach Anspruch 3, 4 oder 5, dadurch gekennzeichnet, daß der Sensor sowohl als Beleuchtungssensor zur Detektion der Umgebungshelligkeit, von Tunnelein- und Tunnelausfahrten, von weiteren beleuchteten Fahrzeugen, einer Sichtweiteneinschränkung o. dgl., wie auch als Wischsensor zur Detektion von Feuchtigkeit auf der Windschutzscheibe, einer inneren oder äußeren Scheibenverschmutzung o. dgl., ausgestattet ist und daß vorzugsweise der Sensor hinter der Windschutzscheibe (34) des Kraftfahrzeugs, insbesondere im Bereich des Innenrückspiegels angeordnet ist.

7. Verfahren zum Betrieb eines nach wenigstens einem der vorhergehenden Ansprüche ausgebildeten Sensorsystems (1) für ein Kraftfahrzeug zur Ermittlung einer Meßgröße für einen Aktor, der in funktioneller Abhängigkeit von der Meßgröße betreibbar ist, wobei von einer ersten Umgebung des Sensorsystems (1) stammende optische Strahlung (5) auf ein als Empfangsarray ausgebildetes optoelektrisches Wandlerelement (3) abgebildet wird, wobei die optische Strahlung (5) im optoelektrischen Wandlerelement (3) in ein die Meßgröße repräsentierendes elektrisches Signalfeld umgewandelt wird, und wobei das Signalfeld eine einen Bereich der ersten Umgebung repräsentierende Werteverteilung, insbesondere in der Art eines ein-oder zweidimensionalen Wertefeldes enthält, dadurch gekennzeichnet, daß von einer zweiten Umgebung des Sensorsystems (1) reflektierte optische Strahlung (6) auf dasselbe Empfangsarray abgebildet wird, derart daß das Signalfeld weiter eine den Bereich der zweiten Umgebung repräsentierende Werteverteilung besitzt, daß die gegebenenfalls geeignet interpolierte Werteverteilung des elektrischen Signalfeldes statisch und/oder dynamisch auf wenigstens zwei funktionelle Abhängigkeiten ausgewertet wird, und daß aufgrund der Auswertung entsprechende Steuersignale für wenigstens zwei Aktoren erzeugt werden, bei denen es sich um die Beleuchtungsanlage in Kombination mit der Scheibenwisch- und/oder Scheibenwaschanlage handelt.

## Claims

1. Sensor system for a motor vehicle for determining a measurable variable, with means for recording optical radiation (5) originating from a first environment of the sensor system (1), with means (3) in the form of a receiving array of a linear or planar arrangement of photoelements, such as photodiodes, phototransistors or the like, in particular in the form of a CCD (charge-coupled-device) receiving array for the optoelectrical conversion of the optical radiation (5) into the electrical signals representing the variable, wherein the electrical signals have a signal field with a one or two-dimensional value distribution representing a region of the first environment, with means (4) for evaluating the electrical signals to functional dependencies of the variable, and with means for generating control signals for actuators such that the actuators may be operated in functional dependency of the variable, characterised in that by the means for receiving optical radiation further optical radiation (6) reflected from a second environment of the sensor system (1) may be received, in that the sensor system (1) only has a single receiving array, such that the signal field also has a value distribution representing the region of the second environment, in that the means (4) for evaluating the value distribution of the electrical signal field evaluates statically and/or dynamically to at least two functional dependencies, and in that the control signals generated according to the evaluation of the value distribution serve to control at least two actuators, which consist of the lighting system in combination with the windscreen wiping and/or windscreen washing system.

2. Sensor system according to claim 1, characterised in that the means for receiving the optical radiation comprises an optical element (2) for imaging the optical radiation (5, 6) to the means (3) for optoelectrical conversion, in that preferably the sensor system (1) has at least one electro-optical component (14, 15) emitting optical radiation (19, 20), such as an incandescent lamp, a light-emitting diode, a semiconductor laser or the like, wherein the emitted optical radiation (19, 20) detects a region of the second environment of the sensor system (1) and the portion (6) of the optical radiation (19, 20) reflected by this region of the second environment can be projected to the means (3) for optoelectrical conversion, and wherein preferably the directly and indirectly reflected portions (6, 40) are detectable separately from one another, and in that further preferably the electrooptical components (14, 15), which if necessary can emit optical radiation (19, 2) of varying wavelengths, operate in pulsed manner.

3. Sensor system for a motor vehicle for controlling the lighting system and/or the windscreen wiper according to claim 1 or 2, characterised in that the sensor system has an optical receiving lens (7), which projects optical radiation (5, 6) of the environment in front of the motor vehicle and/or of part of a motor vehicle that is in or next to the detection region of the optical receiving lens (7), said part of the motor vehicle being in particular a windscreen (34) of the motor vehicle, onto a linear or planar receiving array for optoelectrical conversion, and has at least one electro-optical component (14, 15) emitting optical radiation (19, 20) for the illumination of said motor vehicle part, wherein the intensity distribution (Þ) of the optical radiation (5, 6) measured by means of the receiving array is evaluated such that the static amplitude of the intensity distribution (Þ) is used for the activation of the lighting system in the dark, the dynamic change of amplitude of the intensity distribution (Þ) is used for the activation of the lighting system on entering or leaving tunnels or the like and the pulses (32, 33) of the intensity distribution (Þ) overlying the static amplitude dynamically are used when the lighting system is switched on to activate the dipping function, and wherein if required the dynamic shifting of the pulses (32, 33) to the receiving array is used to determine the appropriate time for dipping lights.

4. Sensor system according to claim 3, characterised in that the intensity distribution (Þ) of optical radiation (5, 6) measured by the receiving array is evaluated such that the gradients (49, 50) of the dynamic change in amplitude are used, in particular by differentiation by the pixel (P) of the receiving array for the formation of the first differential or the first differential quotient (dÞ, dP) and the resulting peaks (51, 52), for evaluating restrictions in visibility due to lack of contrast, in particular in the presence of fog, whereby depending on a restriction in visibility the lighting system, in particular fog lights and/or a rear fog light, may be switched on.

5. Sensor system for a motor vehicle according to claim 3 or 4, characterised in that by means of the electro-optical componenets (14, 15), which if required emit optical radiation (19, 20) of varying wavelengths, the windscreen (34) of the motor vehicle may be illuminated on and/or adjacent to the penetration face (39) for the optical radiation (5) to the receiving array coming from the environment, and in that the intensity and functional dependency of the backscattering of the optical radiation (19, 20) is measured and evaluated on the windscreen (34) of the motor vehicle for the corresponding control of the windscreen wiper, and in that additionally preferably the functional dependency between the direct and indirect backscattering (6, 40) of the optical radiation (19, 20) on the penetration face (39) and the face adjacent to the penetration face (39) of the windscreen is used for activating the windscreen washing function, the windscreen heating or the like.

6. Sensor system for a motor vehicle according to claim 3, 4 or 5, characterised in that the sensor is equipped as a lighting sensor for detecting the surrounding brightness of tunnel entries and exits, other illuminated vehicles, a visibility restriction or the like, and also as a wiping sensor for detecting moisture on the windscreen, dirt on the inside or outside windscreen or the like, and in that preferably the sensor is positioned behind the windscreen (34) of the vehicle, in particular in the region of the inside rear-view mirror.

7. Method for operating a sensor system (1) for a motor vehicle designed according to at least one of the preceding claims for detecting a measurable variable for an actuator, which is operable in functional dependency on the variable, wherein optical radiation (5) coming from a first environment of the sensor system (1) is projected to an optoelectrical converter element (3) in the form of a receiving array, wherein the optical radiation (5) is converted in the optoeletrical converter element (3) into an electrical signal field representing the variable, and wherein the signal field contains a value distribution representing a region of the first environment, in particular in the form of a one or two dimensional value field, characterised in that optical radiation (6) reflected by a second environment of the sensor system (1) is recorded onto the same receiving array in such a way that the signal field also has a value distribution representing the region of the second environment, in that the suitably interpolated value distribution of the electrical signal field is evaluated statically and/or dynamically to at least two functional dependencies, and in that on the basis of the evaluation corresponding signals for at least two actuators are produced, which consist of the lighting system in combination with the windscreen and/or windscreen washing system.

## Revendications

1. Système capteur pour un véhicule automobile pour déterminer une grandeur de mesure, comportant des moyens pour recevoir un rayonnement optique (5) issu d'un premier environnement du système capteur (1), des moyens (3) réalisés comme ensemble de réception constitué d'un agencement linéaire ou en surface de photoéléments, comme des photodiodes, des phototransistors ou analogues, en particulier comme ensemble de réception CCD (dispositif à couplage de charge) pour la transformation optoélectrique du rayonnement optique (5) en des signaux électriques représentant la grandeur de mesure, les signaux électriques possédant un champ ayant une répartition de valeurs uni- ou bidimensionnelle, représentant une zone du premier environnement, des moyens (4) pour exploiter les signaux électriques en dépendance fonctionnelle de la grandeur de mesure, et des moyens pour engendrer des signaux de commande pour des appareillages, de sorte que les appareillages peuvent fonctionner en dépendance fonctionnelle de la grandeur de mesure,
caractérisé en ce qu'un autre rayonnement optique (6) réfléchi à partir d'un second environnement du système capteur (1) peut être reçu par les moyens pour recevoir le rayonnement optique, en ce que le système capteur (1) possède simplement un ensemble de réception unique, de sorte que le champ de signaux possède de plus une répartition de valeurs représentant la zone du second environnement, en ce que les moyens (4) d'exploitation exploitent la répartition de valeurs du champ de signaux électrique de façon statique et/ou dynamique en au moins deux dépendances fonctionnelles, et en ce que les signaux de commande, engendrés de façon correspondant à l'exploitation de la répartition des valeurs servent à la commande d'au moins deux appareillages, pour lesquels il s'agit de l'installation d'éclairage en combinaison avec l'installation de lave-glace et/ou l'installation d'essuie-glace.

2. Système capteur selon la revendication 1,
caractérisé en ce que les moyens pour recevoir le rayonnement optique sont constitués d'un élément optique (2) pour représenter le rayonnement optique (5,6) sur les moyens (3) pour la transformation optoélectrique, en ce que, avantageusement, le système capteur (1) possède au moins un organe électrooptique (14,15), émettant un rayonnement optique (19,20), comme une lampe à incandescence, une diode électroluminescente, un laser à semi-conducteur ou analogue, le rayonnement optique émis (19,20) couvrant une zone du second environnement du système capteur (1), et la partie (6), réfléchie par cette zone du second environnement, du rayonnement optique (19,20) pouvant être représentée sur les moyens (3) pour la transformation optoélectrique, et, de plus, avantageusement, les parties réfléchies directement et indirectement (6,40) pouvant être détectées de façon séparée l'une de l'autre, et en ce que, encore avantageusement, les organes électrooptiques (14,15), qui, le cas échéant, peuvent émettre des rayonnements optiques (19,20) de longueurs d'onde différentes, travaillent de façon pulsée.

3. Système capteur pour un véhicule automobile pour la commande de l'installation d'éclairage et/ou de l'essuie-glace selon la revendication 1 ou 2,
caractérisé en ce que le système capteur, une lentille de réception optique (7), représente le rayonnement optique (5,6) de l'environnement devant le véhicule automobile et/ou une partie du véhicule se trouvant dans ou au voisinage de la zone de détection de la lentille de réception optique (7), pour laquelle il s'agit en particulier d'une vitre (34) du véhicule automobile, sur un ensemble de réception linéaire ou en surface pour la transformation optoélectrique, et possède au moins un organe électrooptique (14,15) émettant un rayonnement optique (19,20) pour l'éclairage de cette partie du véhicule, la répartition d'intensité (φ), mesurée au moyen de l'ensemble de réception, du rayonnement optique (5,6) étant exploitée de sorte que l'amplitude statique de la répartition d'intensité (φ) pour l'actionnement de l'installation d'éclairage en cas d'obscurité, la modification dynamique de l'amplitude de la répartition d'intensité (φ) pour l'actionnement de l'installation d'éclairage lors de l'entrée ou de la sortie d'un tunnel ou analogue, et les impulsions (32,33), se superposant de façon dynamique à l'amplitude statique, de la répartition d'intensité (φ) sont utilisées, lorsque l'installation d'éclairage est en service, pour la mise en oeuvre de la fonction de passage en code, et, le cas échéant, la dérive dynamique des impulsions (32,33) sur l'ensemble de réception est utilisée pour déterminer le moment pour le passage en code.

4. Système capteur selon la revendication 3,
caractérisé en ce que la répartition d'intensité (φ), mesurée au moyen de l'ensemble de réception, du rayonnement optique (5,6) est exploitée de sorte que les rampes (49,50) de la modification dynamique de l'amplitude, en particulier par différenciation par l'intermédiaire des pixels (P) de l'ensemble de réception pour la formation de la première dérivée ou du premier quotient différentiel (dφ/dP) ainsi que du pic en résultant (51,52), sont utilisées pour mesurer des limitations de vision par manque de contraste, en particulier en présence de brouillard, l'installation d'éclairage, en particulier un phare antibrouillard et/ou un phare antibrouillard arrière, pouvant être mise en service de façon dépendant d'une limitation de vision.

5. Système capteur pour un véhicule automobile selon la revendication 3 ou 4,
caractérisé en ce que, au moyen des organes électrooptiques (14,15), qui émettent, le cas échéant, des rayonnements optiques (19,20) de longueurs d'onde différentes, la vitre (34) du véhicule automobile peut être éclairée sur et/ou de façon voisine à la surface de traversée (39) pour le rayonnement optique (5) issu de l'environnement vers l'ensemble de réception, en ce que l'intensité et la dépendance fonctionnelle de la rétrodiffusion du rayonnement optique (19,20) sur la vitre (34) du véhicule sont mesurées et exploitées pour la commande correspondante de l'essuieglace, et en ce que, encore avantageusement, la dépendance fonctionnelle entre la rétrodiffusion directe et la rétrodiffusion indirecte (6,40) du rayonnement optique (19,20) sur la surface de traversée (39) et la surface, voisine de la surface de traversée (39), de la vitre (34) est utilisée pour la mise en oeuvre de la fonction de lave-glace, de chauffage de la vitre ou analogue.

6. Système capteur pour un véhicule automobile selon la revendication 3, 4 ou 5,
caractérisé en ce que le capteur est réalisé aussi bien comme capteur d'éclairage pour la détection de la luminosité de l'environnement, de l'entrée et de la sortie d'un tunnel, d'autres véhicules éclairés, d'une limitation de l'étendue de vision ou analogue, que comme capteur d'essuyage pour la détection d'humidité sur le pare-brise, de saleté interne ou externe de la vitre ou analogue, et en ce que, avantageusement, le capteur est agencé derrière le pare-brise (34) du véhicule automobile, en particulier dans la zone du rétroviseur.

7. Procédé pour la mise en oeuvre d'un système capteur (1) réalisé selon au moins une des revendications précédentes pour un véhicule automobile pour détecter une grandeur de mesure pour un appareillage, qui fonctionne en dépendance fonctionnelle de la grandeur de mesure, un rayonnement optique (5) issu d'un premier environnement du système capteur (1) étant représenté sur un élément de transformation optoélectrique (3) réalisé comme ensemble de réception, le rayonnement optique (5) étant transformé, dans l'élément de transformation optoélectrique (3), en un champ de signaux électrique représentant la grandeur de mesure, et le champ de signaux présentant une répartition de valeurs représentant une zone du premier environnement, en particulier du type d'un champ de valeurs uni- ou bidimensionnel,
caractérisé en ce qu'un rayonnement optique réfléchi (6) par un second environnement du système capteur (1) est représenté sur le même ensemble de réception, de sorte que le champ de signaux possède de plus une répartition de valeurs représentant la zone du second environnement, en ce que la répartition de valeurs, le cas échéant interpolée de façon appropriée, du champ de signaux électrique est exploitée de façon statique et/ou dynamique en au moins deux dépendances fonctionnelles, et en ce que, par suite de l'exploitation, des signaux de commande correspondants pour au moins deux appareillages sont engendrés, pour lesquels il s'agit de l'installation d'éclairage en combinaison avec l'installation de lave-glace et/ou l'installation d'essuie-glace.
